# FASCICULE DE BREVET EUROPEEN

(11) **EP 3 648 700 B1**
(45) Date de publication et mention de la délivrance du brevet: **13.04.2022**
(21) Numéro de dépôt: 18735321.4
(22) Date de dépôt: 04.07.2018
(51) Int. Cl.: A61C 8/00

(54) **ENSEMBLE DE PRISE D'EMPREINTE DENTAIRE**
SATZ ZUM ZAHNABFORMEN
SET FOR DENTAL IMPRESSION

(30) Priorité: 07.07.2017 FR 1756427
(43) Date de publication de la demande: 13.05.2020
(73) Titulaire: Euroteknika, 74700 Sallanches (FR)
(72) Inventeur: LEGER, Théo, 74700 Domancy (FR); CALVAT, Benjamin, 73400 Ugine (FR); CONSTANT, Loïs, 74170 Saint-Gervais Les Bains (FR); LANCIEUX, Cédric, 74120 Megève (FR)
(74) Mandataire: Novaimo
(86) Numéro de dépôt international: PCT/EP2018/068112
(87) Numéro de publication internationale: WO 2019/008049

(56) Documents cités:
- WO-A1-97/17907
- WO-A1-2014/081843
- WO-A1-2016/066516
- US-A1- 2015 182 309

## Description

La présente invention se rapporte à un ensemble de prise d'empreinte dentaire.

La restauration dentaire permet de réaliser une dentition artificielle à un patient partiellement ou totalement édenté. Elle repose sur l'intégration d'un ou plusieurs implants dans la structure osseuse, pratiquée par une incision de la gencive afin d'atteindre la structure osseuse et de la percer. Ensuite, un élément de cicatrisation est en général fixé sur un implant et cet ensemble reste intouché jusqu'à solidarisation de l'implant dans la structure osseuse par ostéointégration et cicatrisation de la gencive autour de l'élément de cicatrisation. La restauration dentaire peut être finalisée par la fixation d'un pilier de restauration sur l'implant, sur lequel est fixée la prothèse dentaire. Le pilier et la prothèse dentaire sont personnalisés, adaptés à l'anatomie du patient et à la dent à remplacer, pour atteindre un résultat aussi proche que possible de la dentition naturelle idéale. Pour cela, le volume précis de l'espace à restaurer est en général pris en compte, par une prise d'empreinte, qui permet la fabrication personnalisée de la prothèse dentaire.

Dans l'état de la technique, les méthodes existantes de restauration dentaire se heurtent à tout ou partie des problèmes techniques suivants :
- dans de nombreux procédés existants, une nouvelle intervention sur la gencive est réalisée après sa cicatrisation suite à la pause d'implant, pour réaliser l'empreinte, matérielle ou numérique, de l'espace à restaurer, tout en ayant une vue de l'implant et de la gencive pour prendre en compte précisément l'ensemble de cette géométrie, dans le but de fabriquer un pilier et une prothèse de formes précises : cette approche est naturellement traumatisante ;
- d'autres procédés existants limitent ce traumatisme en utilisant des composants de cicatrisation qui ne sont pas retirés lors d'une prise d'empreinte, pour ne pas heurter la gencive : en contrepartie, ces procédés utilisent des éléments cicatrisants particuliers, en général de forme sensiblement cylindrique et standard et intégrant parfois des indicateurs et/ou plusieurs composants complémentaires pour permettre la prise en compte de tout ou partie de la géométrie au-dessus de l'implant sans y avoir totalement accès par une prise d'empreinte. Ces méthodes moins traumatisantes présentent alors d'autres inconvénients, de complexité et/ou de moins bonne optimisation de la phase de cicatrisation.

Ainsi, un objet général de l'invention consiste en une solution de restauration dentaire qui ne comprend pas tout ou partie des inconvénients de l'état de la technique.

Plus précisément, un premier objet de l'invention est une solution de restauration dentaire qui minimise le traumatisme du patient lors du procédé de restauration.

Un second objet de l'invention est une solution de restauration dentaire qui permet une restauration la plus adaptée possible à l'anatomie du patient.

Un troisième objet de l'invention est une solution de restauration dentaire la plus universelle possible, adaptée à tout implant et toute restauration.

Dans ce dessein, l'invention porte sur un ensemble de prise d'empreinte dentaire selon la revendication 1, comprenant un élément de cicatrisation apte à une connexion avec un implant dentaire, comportant une surface latérale destinée à une intégration au sein d'une gencive pour mettre en forme la gencive lors de sa cicatrisation, et une surface terminale formant avec une partie de ladite surface latérale une surface émergente, destinée à rester hors de la gencive, qui est asymétrique par rapport à au moins un plan médian perpendiculaire, ledit ensemble comprenant un élément de transfert d'empreinte amovible comprenant une partie de fixation à un matériau de prise d'empreinte d'un porte-empreinte dudit ensemble et une partie de liaison susceptible de coopérer avec une zone de liaison complémentaire définie dans une ouverture traversante ménagée dans ledit élément de cicatrisation.

Dans d'autres modes de réalisation :
- des première et deuxième parties de la surface émergente destinées respectivement à un positionnement orienté vers l'intérieur et vers l'extérieur de la bouche présentent une forme différente ;
- une section transverse de la surface latérale ou une projection sur un plan parallèle de la surface émergente présente :
   ▪ une forme sensiblement trapézoïdale ou une forme sensiblement polygonale, ou triangulaire, ou carrée, ou rectangulaire, ou ovoïde, ou une forme sensiblement polygonale avec des angles arrondis, et/ou
   ▪ une deuxième partie destinée à un positionnement orienté vers l'extérieur de la bouche de plus grande dimension qu'une première partie destinée à un positionnement orienté vers l'intérieur.
- la surface terminale et/ou la surface émergente présente :
   ▪ une surface non plane, courbée ; et/ou
   ▪ une surface convexe ; et/ou
   ▪ une surface sans aspérité notamment à l'exception de l'ouverture ;
- dans la configuration où l'élément de cicatrisation est fixé seul sur un implant, la tête de la vis vient se noyer dans l'élément de cicatrisation et ne dépasse pas de la face terminale de l'élément de cicatrisation. La vis vient fermer la surface émergente et la compléter pour former une surface globalement continue, notamment sans aspérité ;
- l'élément de cicatrisation est un capuchon qui comprend une ouverture dans une surface opposée à la surface terminale ;
- la partie de fixation comprend une première composante essentiellement cylindrique et une deuxième composante comprenant au moins un élément d'ancrage notamment deux éléments d'ancrage ;
- ledit au moins un élément d'ancrage est défini sur une paroi périphérique externe de la première composante notamment au niveau d'une extrémité libre de la partie de fixation ;
- ledit au moins un élément d'ancrage a une section transversale ayant essentiellement la forme d'un quadrilatère ;
- un plan médian dudit élément d'ancrage est sensiblement perpendiculaire à un axe longitudinal de l'élément de transfert ;
- la partie de liaison comprend une première portion susceptible de prendre appui et/ou d'être en contact avec la surface émergente notamment la surface terminale et une deuxième portion comprenant un élément de fixation définie dans une extrémité libre de cette partie de liaison ;
- l'élément de fixation tel qu'un premier organe de clippage ou une partie filetée est susceptible de coopérer avec la zone de liaison afin de réaliser une liaison mécanique ;
- la zone de liaison comprend :
   ▪ un deuxième organe de clippage notamment une gorge définie dans une paroi de l'ouverture traversante qui est prévu pour coopérer avec un premier organe de clippage, ou
   ▪ une partie taraudée définie dans une paroi de l'ouverture traversante prévue pour coopérer avec une partie filetée d'un élément de fixation de la partie de liaison ;
- la première portion a une forme tronconique et est apte à coopérer avec la surface terminale et en particulier avec une portée conique définie dans cette surface pour rendre étanche une interface entre l'élément de cicatrisation et l'élément de transfert et ce, afin de réduire à zéro tout jeu en translation entre cet élément de cicatrisation et cet élément de transfert ;
- la première portion comporte une face externe prévu pour couvrir tout ou partie de la surface émergente de l'élément de cicatrisation ;
- la face externe comprend une cavité définie autour de la deuxième portion présentant une forme complémentaire à tout ou partie de la surface émergente avec laquelle elle est susceptible d'être en contact ;
- l'élément de transfert comprend un élément anti-rotationnel défini sur tout ou partie d'une région d'une paroi périphérique de cette partie de liaison en s'étendant longitudinalement sur cette région conformément à un axe longitudinal de cette partie de liaison ;
- l'élément de cicatrisation comprend un logement de positionnement dudit élément de transfert dans une direction radiale prédéfinie par rapport à un axe longitudinal de cet élément de transfert ;
- le logement est une cannelure susceptible de recevoir l'élément anti-rotationnel de l'élément de transfert ;
- le logement comprend une enceinte ayant une forme complémentaire à celle de l'élément anti-rotationnel ;
- l'élément de transfert est fabriqué à partir d'un matériau polymère, notamment à partir d'un matériau « PEEK », « PMMA » ou encore « POM » ;
- l'élément de transfert est fabriqué selon un processus d'usinage et/ou de moulage et/ou d'addition de matière ;
- un axe longitudinal de l'élément de transfert s'étendant sur toute sa longueur est confondu avec des axes longitudinaux d'une première composante de la partie de fixation et de la partie de liaison ;
- l'élément de transfert comprend un axe longitudinal s'étendant sur toute sa longueur apte à un alignement avec un axe de l'élément de cicatrisation ;
- l'élément de transfert est une pièce monobloc, et
- l'élément de transfert comprend une première partie et une deuxième partie dite haute qui est sécable pourvue d'un élément d'ancrage, lesdites première et deuxième parties formant un ensemble monobloc.

L'invention porte également sur un procédé de prise d'empreinte dentaire à partir de l'ensemble de prise d'empreinte dentaire selon la revendication 1, comprenant une étape d'agencement d'un élément de transfert d'empreinte amovible sur un élément de cicatrisation situé dans une mâchoire supérieure ou inférieure d'une cavité buccale et une étape de mise en place d'un porte-empreinte comportant un matériau de prise d'empreinte sur ladite mâchoire de sorte qu'une partie de fixation dudit élément de transfert est comprise dans ledit matériau de prise d'empreinte.

Avantageusement, le procédé comprend une étape de retrait du porte-empreinte comprenant l'élément de transfert de ladite mâchoire.

En particulier, le procédé comprend une étape d'obturation de l'ouverture traversante de l'élément de cicatrisation.

D'autres avantages et caractéristiques de l'invention apparaîtront mieux à la lecture de la description d'un mode de réalisation préféré qui va suivre, en référence aux figures, réalisé à titre d'exemple indicatif et non limitatif :
- les figures 1A et 1B représentent respectivement des vues en perspective d'un ensemble de prise d'empreinte dentaire selon un mode de réalisation de l'invention ;
- la figure 1C représente une vue en coupe longitudinale des ensembles de restauration temporaire représentés sur les figures 1A et 1B selon le mode de réalisation de l'invention ;
- la figure 2A représente une vue en perspective de l'ensemble de prise d'empreinte dentaire comprenant une variante de l'élément de transfert qui est sécable, selon un mode de réalisation de l'invention ;
- la figure 2B représente une vue en coupe longitudinale de l'ensemble de restauration temporaire représenté sur la figure 2A selon le mode de réalisation de l'invention ;
- la figure 2C représente une vue en perspective de l'élément de transfert d'empreinte sécable de l'ensemble de prise d'empreinte illustré sur les figures 2A et 2B selon le mode de réalisation de l'invention ;
- la figure 2D représente une vue en coupe longitudinale de l'élément de transfert d'empreinte illustré sur la figure 2C selon le mode de réalisation de l'invention ;
- la figure 3 représente une vue à plus grande échelle d'une partie de la figure 2 illustrant un élément de transfert d'empreinte amovible monté sur un ensemble de cicatrisation selon le mode de réalisation de l'invention ;
- la figure 4 représente une vue en perspective de l'élément de transfert d'empreinte de l'ensemble de prise d'empreinte selon le mode de réalisation de l'invention ;
- la figure 5 représente une vue en coupe longitudinale de l'élément de transfert d'empreinte illustré sur la figure 4 selon le mode de réalisation de l'invention ;
- la figure 6 représente une vue en perspective de l'élément de cicatrisation de l'ensemble de prise d'empreinte selon le mode de réalisation ;
- la figure 7 représente une vue en coupe longitudinale de l'élément de cicatrisation illustré sur la figure 6 selon le mode de réalisation de l'invention ;
- les figures 8 et 9 représentent respectivement des vues en perspective de dessous et de dessus d'un élément de cicatrisation selon le mode de réalisation de l'invention ;
- les figures 10A à 10C et 11A à 11C représentent respectivement des vues en perspective de dessus et de dessous d'une série d'éléments de cicatrisation selon le mode de réalisation de l'invention ;
- les figures 12A à 12C, 13A à 13C et 14A à 14C représentent respectivement des vues de côté, de dessus et de dessous d'une série d'éléments de cicatrisation selon le mode de réalisation de l'invention ;
- la figure 15 illustre une vue en coupe d'un élément de cicatrisation disposé dans un implant selon le mode de réalisation de l'invention ;
- la figure 16 illustre une vue de côté d'un élément de cicatrisation disposé dans un implant selon le mode de réalisation de l'invention ;
- la figure 17 représente une vue en coupe d'un implant selon le mode de réalisation de l'invention ;
- la figure 18 illustre une vue en coupe d'un élément de cicatrisation fixé sur un implant par une vis selon le mode de réalisation de l'invention ;
- les figures 19 et 20 représentent respectivement une vue de côté et une vue en coupe d'une phase intermédiaire d'association d'un implant avec un élément de cicatrisation et avec une vis selon le mode de réalisation de l'invention ;
- la figure 21 illustre une vue en coupe d'un ensemble de cicatrisation comprenant un élément de cicatrisation entouré de la gencive et fixé dans un implant selon le mode de réalisation de l'invention ;
- les figures 22, 23 et 24 représentent deux vues schématiques d'une gencive en coupe au sein de laquelle est fixé un élément de cicatrisation selon le mode de réalisation de l'invention ;
- la figure 25 représente les dents inférieures et supérieures en vue de dessus ;
- la figure 26 représente une vue des dents selon une section justa-gingivale ;
- la figure 27 représente une section horizontale de la dentition au niveau justa-gingival ainsi que les éléments de cicatrisation correspondants retenus selon le mode de réalisation de l'invention ;
- les figures 28 à 30 représentent des vues en coupe par un plan médian vertical selon le mode de réalisation de l'invention, et
- la figure 31 représente un logigramme relatif à un procédé de prise d'empreinte dentaire selon le mode de réalisation de l'invention.

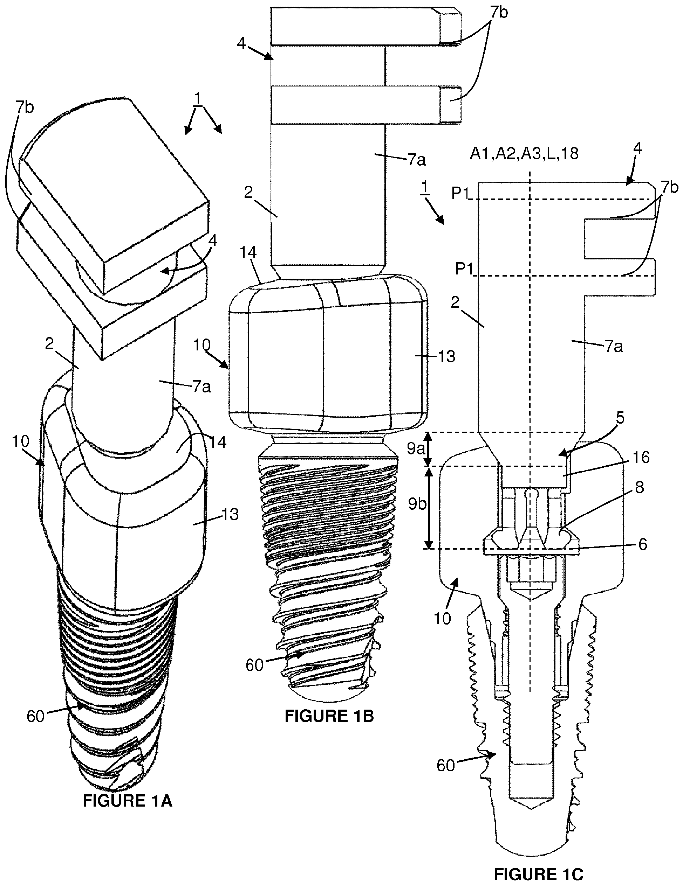

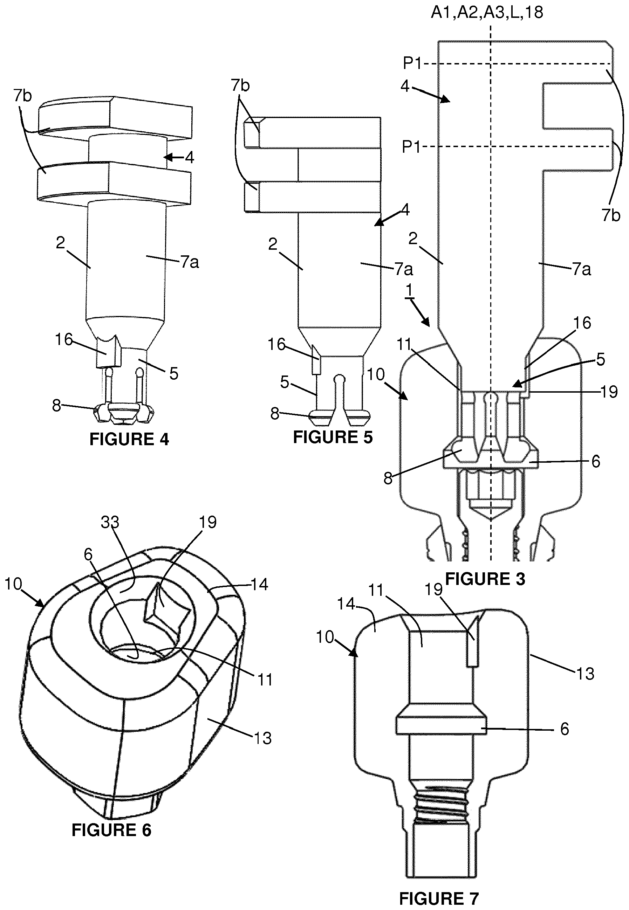

Dans les modes de réalisation représentés sur les figures 1 à 7, l'ensemble de prise d'empreinte dentaire 1 comprend un élément de cicatrisation 10, apte à une connexion avec un implant dentaire 60, et un élément de transfert d'empreinte 2 ainsi qu'un porte empreinte. Un tel ensemble de prise d'empreinte 1 participe à la mise en œuvre d'une deuxième phase d'un procédé de restauration dentaire qui peut comprend trois phases :
- une première phase dite de cicatrisation durant laquelle un ou plusieurs implant(s) sont intégrés dans la structure osseuse du patient par ostéointégration, et durant laquelle l'élément de cicatrisation 10 particulier est utilisé, comme cela va être détaillé par la suite ;
- une deuxième phase de prise d'empreinte comprenant notamment une mise en place de l'élément de transfert d'empreinte 2 sur l'élément de cicatrisation 10 de préférence à l'issu de la première phase, et
- une troisième phase de restauration en tant que telle, durant laquelle une prothèse définitive est mise en place sur le ou les implants par l'intermédiaire d'un pilier de restauration.

En remarque, l'élément de cicatrisation doit nécessairement être adapté pour une utilisation seul en bouche, notamment pendant la première phase. Ainsi, l'élément de cicatrisation peut occuper une première configuration dans laquelle il reçoit la fixation amovible d'un élément de transfert d'empreinte, et une deuxième configuration dans laquelle il est fixé seul sur un implant, sans ajout d'aucun autre composant.

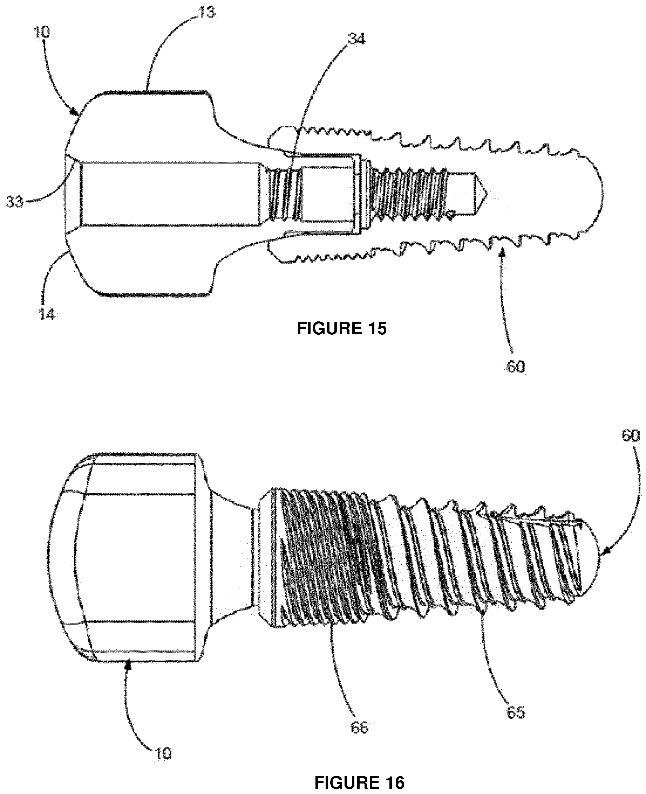

En référence aux figures 1 à 30, l'implant 60 comprend une enveloppe globale de forme cylindrique ou tronconique et un axe longitudinal L formant un axe de révolution de cette enveloppe globale. L'implant 60 comprend un moyen d'ancrage dans la structure osseuse du patient. Ce moyen d'ancrage peut être un ensemble de filets disposés sur un pourtour extérieur de l'implant et comprenant un pas de filetage variable. Une partie inférieure de l'implant, c'est-à-dire une partie de l'implant au fond de la structure osseuse, peut comprendre des filets plus larges tandis qu'une partie supérieure de l'implant, c'est-à-dire une partie de l'implant du coté de la surface de la structure osseuse, peut comprendre des filets plus fins. L'implant comprend une ouverture du côté de son extrémité supérieure et suivant l'axe longitudinal L à l'intérieur de laquelle se trouve un dispositif de connexion avec l'élément de cicatrisation 10. Le dispositif de connexion comprend une ouverture filetée 21, une ouverture de section hexagonale 22 dans le prolongement de l'ouverture filetée et une portée conique débouchant sur une face supérieure de l'implant. L'ouverture filetée 21, l'ouverture de section hexagonale 22 et la portée conique sont adjacentes, coaxiales à l'axe longitudinal L et agencées de sorte que l'ouverture filetée 21 est du coté inférieur de l'implant 10, la portée conique est du coté supérieur de l'implant 10 et l'ouverture de section hexagonale 22 est entre l'ouverture filetée 21 et la portée conique.

Dans cet ensemble, l'élément de cicatrisation 10 autrement appelé « capuchon » est une pièce monobloc, c'est-à-dire qu'il est constitué d'une seule pièce et de préférence à partir d'un unique matériau. Il a pour fonction de venir se loger au sein de la gencive incisée, après fixation de l'implant, par fixation directe ou indirecte, de préférence amovible, à l'implant.

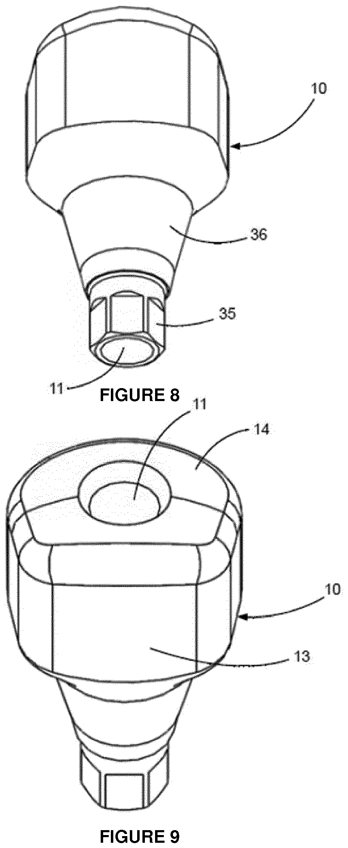

Comme illustré sur les figures 8 à 30, l'élément de cicatrisation 10 comprend une partie supérieure 31 destinée à être en contact avec la gencive et une partie inférieure 32 destinée à être introduite dans l'ouverture de l'implant pour coopérer avec le dispositif de connexion.

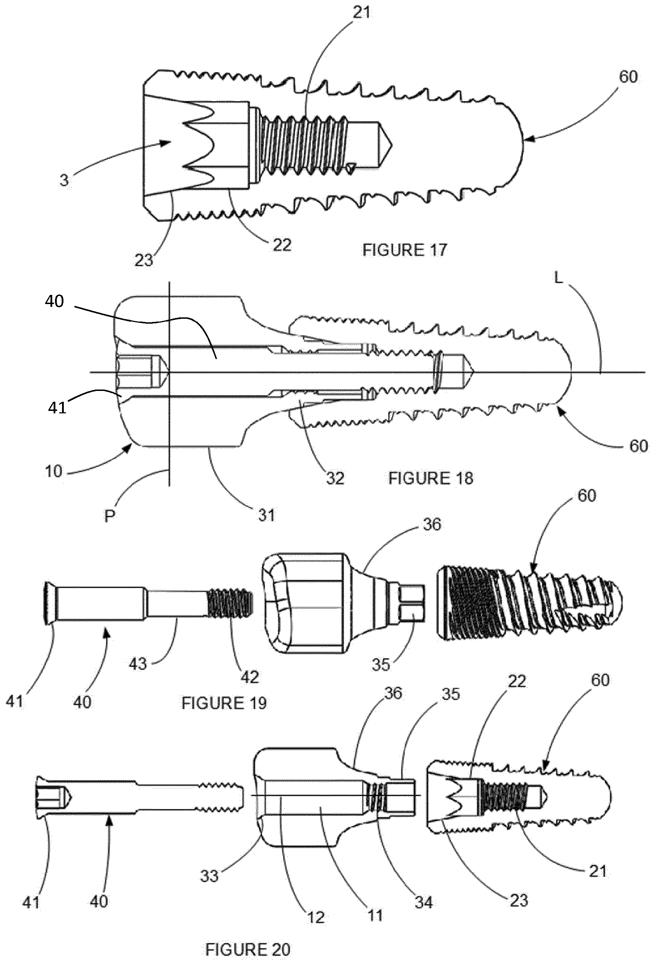

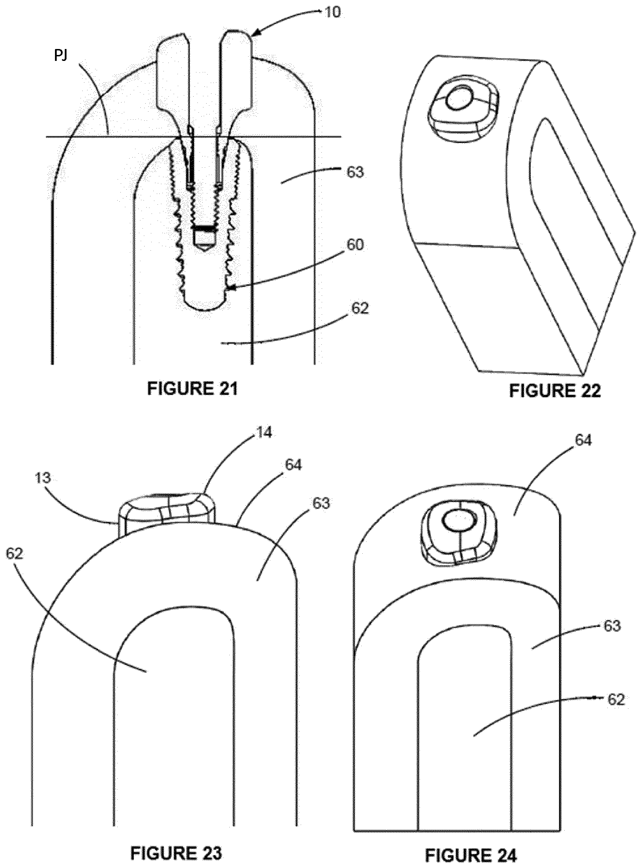

L'élément de cicatrisation 10 comprend une ouverture traversante 11 orientée selon un axe et destinée à recevoir une vis 40 vissée dans l'ouverture filetée 21 de l'implant. Autrement dit, l'élément de cicatrisation 10 comprend une ouverture dans une surface opposée à la surface terminale 14. L'élément de cicatrisation 10 est donc destiné à être fixé directement sur l'implant par l'intermédiaire de la vis 40. Lorsque l'élément de cicatrisation 10 est fixé sur l'implant, l'axe de l'ouverture traversante 11 est confondu avec l'axe longitudinal L de l'implant. Cet assemblage est notamment illustré par les figures 18 et 21. L'ouverture 11 traversante est de forme globalement cylindrique et comprend, à une extrémité du coté de la partie supérieure, une portée conique 33. Cette portée conique 33 est destinée à coopérer avec une portée conique d'une tête de vis 41 de forme complémentaire de manière à former une interface étanche. La portée conique 33 et la tête de vis 41 ont donc une fonction de cône d'étanchéité.

L'élément de cicatrisation 10 comprend au moins un filet 34 disposé au niveau de l'ouverture 11 et apte à coopérer avec une partie filetée de la vis 40 pour empêcher une dissociation entre la vis 40 et l'élément de cicatrisation 10 par un seul mouvement de translation. La vis 40 comprend une partie cylindrique non filetée entre la partie filetée et la tête de vis 41. La partie filetée est destinée à collaborer avec l'ouverture filetée 21 de l'implant pour bloquer en position l'élément de cicatrisation 10. La partie cylindrique de la vis est destinée à être positionnée le long de l'ouverture 11 de l'élément de cicatrisation 10. Lors de l'assemblage de la vis 40 avec l'élément de cicatrisation 10, la vis doit être vissée au travers de l'au moins un filet 34. La vis est conçue de sorte que, lorsque la tête de vis 41 est en appui sur la portée conique 33 de l'élément de cicatrisation 10, l'au moins un filet 34 est en vis-à-vis de la partie cylindrique de la vis. Avantageusement, la partie filetée de la vis 40 ne peut pas être simultanément en prise avec l'au moins un filet 34 et l'ouverture filetée 21 de l'implant. Un tel assemblage de la vis, également dénommé « imperdable » permet d'éviter de dissocier par erreur un élément de cicatrisation 10 de la vis qui lui est associée, par exemple cet assemblage permet d'éviter de faire tomber la vis en manipulant l'élément de cicatrisation 10. L'élément de cicatrisation 10 et la vis peuvent ainsi être livrés pré-assemblés ce qui réduit la quantité de manipulations pour le dentiste. En outre, l'au moins un filet 34 constitue également un point d'accroche de l'élément de cicatrisation 10 qui pourra être utilisé lors d'un retrait ultérieur de l'élément de cicatrisation 10. En effet, le dentiste peut alors dévisser partiellement la vis de manière à dissocier sa partie filetée de l'ouverture filetée 21 de l'implant tout en conservant une prise de la partie filetée sur l'au moins un filet 34 de l'élément de cicatrisation 10. Le dentiste peut alors facilement saisir la tête de vis et tirer dessus pour démonter l'élément de cicatrisation 10 sans transmettre d'effort à l'implant et sans gêne pour le patient.

Ainsi que nous l'avons évoqué précédemment, dans une alternative à la fixation directe de l'élément de cicatrisation 10 à l'implant 60 décrite auparavant, ce dernier peut être fixé de manière indirecte à cet implant 60. En effet, selon un procédé décrit dans le document FR3027792, cet élément de cicatrisation 10 peut être fixé de manière amovible à une embase de pilier qui est connectée à l'implant 60. Dans cette configuration, l'implant 60 est solidarisé à la partie osseuse, l'embase de pilier est fixée sur l'implant 60, de sorte que sa collerette se trouve positionnée au niveau de la frontière entre la partie osseuse et la gencive. L'élément de cicatrisation 10 recouvre l'embase de pilier jusqu'à la collerette, de sorte que la gencive est presque exclusivement en contact avec l'élément de cicatrisation 10. L'ensemble formé par l'assemblage de l'élément de cicatrisation 10 sur cette embase de pilier correspond ainsi à un ensemble de cicatrisation.

L'élément de cicatrisation 10 comprend à son extrémité inférieure et sur un pourtour extérieur une portion de section hexagonale 35, apte à coopérer avec l'ouverture de section hexagonale 22 de l'implant. L'interface ainsi formée permet de garantir une fixation de l'élément de cicatrisation 10 à orientation unique, sans rotation de l'élément de cicatrisation 10 autour de l'implant 60. La portion de section hexagonale 35 et l'ouverture de section hexagonale 22 sont des éléments anti-rotationnels qui pourraient être remplacés par tous autres éléments anti-rotationnels équivalents. En outre, l'élément de cicatrisation 10 comprend également sur le pourtour extérieur de sa partie inférieure 32 une portion tronconique 36 ou sensiblement tronconique, apte à coopérer avec la portée conique 23 de l'implant pour former une interface étanche entre l'implant et l'élément de cicatrisation 10. La portion tronconique 36 comprend une frontière entre la partie inférieure 32 et la partie supérieure 31 de l'élément de cicatrisation 10. La portée conique 23 et la portion tronconique 36 ont une fonction de cône d'étanchéité et également une fonction de positionnement unique de l'élément de cicatrisation 10 par rapport à l'implant. En effet l'assemblage de la portée conique 23 avec la portion tronconique 36 constitue une liaison pivot d'axe confondu avec l'axe longitudinal L. En particulier, après serrage de la vis 40, une telle liaison réduit à zéro tout jeu en translation entre l'élément de cicatrisation 10 et l'implant selon l'axe longitudinal L ou tout axe perpendiculaire à l'axe longitudinal L. De plus, comme une rotation de l'élément de cicatrisation 10 par rapport à l'implant est impossible grâce à l'interface constituée par la portion de section hexagonale 35 et l'ouverture de section hexagonale 22, la liaison entre l'élément de cicatrisation 10 et l'implant est une liaison particulièrement rigide.

La partie supérieure de l'élément de cicatrisation 10 comprend une face terminale 14 au travers de laquelle débouche la portée conique 33 de l'ouverture 11 et une surface latérale 13 autour de laquelle la gencive est destinée à se cicatriser. La portée conique est orientée vers l'intérieur de l'élément de cicatrisation 10 de sorte que la tête de vis 41 est noyée dans l'élément de cicatrisation 10. Ainsi la tête de vis 41 ne dépasse pas de la face terminale 14. Ainsi, la tête de vis 41 est agencée de sorte à venir fermer l'ouverture 11 de la face terminale, tout en prolongeant sa surface pour en faire une surface finale continue, comme cela est particulièrement visible sur la figure 18.

Les implants existants peuvent avoir des formes différentes et notamment des dispositifs de connexion différents. Il peut exister autant d'éléments de cicatrisation différents que de dispositifs de connexion différents, afin de pouvoir disposer, pour chaque implant existant, d'un élément de cicatrisation 10 doté d'un dispositif de connexion qui lui est adapté.

L'élément de cicatrisation 10 a pour fonction de venir se loger au sein de la gencive incisée, après fixation d'un implant. La configuration finale est représentée sur la figure 21. Dans cette configuration, l'implant 60 est solidarisé à la structure osseuse 62 et émerge faiblement de la partie osseuse dans la gencive 63. L'élément de cicatrisation 10 est fixé à l'implant 60 de sorte que la gencive est presque exclusivement en contact avec l'élément de cicatrisation 10. L'élément de cicatrisation 10 participe temporairement à un procédé de restauration, permettant la cicatrisation et la fabrication sans heurt de la prothèse définitive.

La gencive se cicatrise donc autour de la surface latérale 13 de l'élément de cicatrisation 10. Pour cela, cette surface latérale 13 est choisie pour correspondre au mieux au milieu buccal du patient. La surface terminale 14 de l'élément de cicatrisation 10 est destinée à rester visible au-dessus de la surface gingivale 64 de la gencive, puisque la gencive 63 reste intégralement en contact avec la surface latérale 13 de l'élément de cicatrisation 10. En remarque, la partie haute de la surface latérale 13 et la surface terminale 14 forment donc une surface émergente de l'élément de cicatrisation 10. Cette surface émergente est notamment illustrée par les figures 22 à 24. Pour cela, des éléments de cicatrisation de hauteur différente peuvent être prévus pour s'adapter à différentes configurations de la géométrie buccale. A titre d'exemples de réalisation, trois hauteurs différentes standard permettent une bonne adaptation à toutes les situations. Cette hauteur est avantageusement comprise entre 3 et 10 mm. Une coloration de la vis peut permettre d'identifier rapidement la hauteur de l'élément de cicatrisation 10. Par exemple, une vis de couleur bleue peut être associée à l'élément de cicatrisation 10 de petite taille. Une vis de couleur verte peut être associée à l'élément de cicatrisation 10 de taille intermédiaire. Une vis de couleur rouge peut être associée à l'élément de cicatrisation 10 de grande taille. Ainsi, le dialogue entre dentistes et prothésistes peut être simplifié.

Selon le mode de réalisation de l'invention, la forme de l'élément de cicatrisation 10 est spécifiquement choisie pour favoriser la cicatrisation de la gencive, selon une forme anatomique correspondant au mieux à la dent à remplacer et par conséquent aussi à la future prothèse destinée à occuper cet espace buccal. Cette forme est notamment caractérisée par la section plane de sa surface latérale 13, cette section étant une section transverse par un plan perpendiculaire P à la surface latérale 13, représenté sur la figure 18, et sensiblement parallèle à la surface terminale 14. En remarque, cette section est sensiblement reproduite par la forme de la surface terminale 14, ou plus précisément par la projection de cette surface terminale 14 sur un tel plan perpendiculaire, c'est-à-dire sensiblement parallèle à la surface gingivale 64.

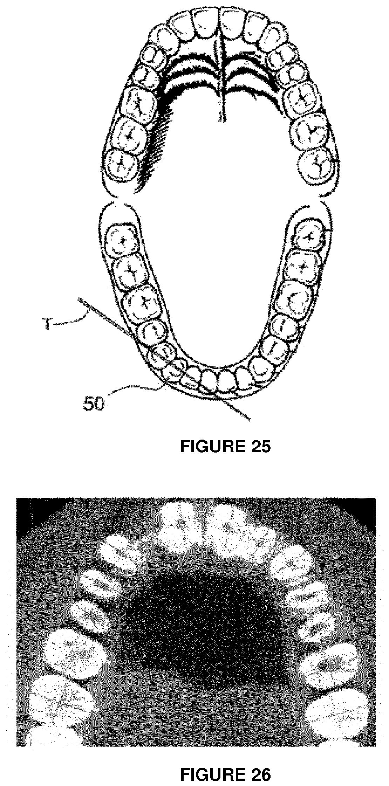

Pour comprendre l'approche retenue, la figure 25 illustre une vue de dessus des dents supérieures et inférieures et la figure 26 illustre une vue en coupe au niveau du plan justagingival PJ d'une dentition, représenté sur la figure 21, au niveau de la racine des émergences des dents. Ces figures montrent que les dents possèdent des sections de formes différentes, que l'on peut simplifier par des formes rectangulaires et/ou carrées et/ou triangulaires, mais plus précisément trapézoïdales.

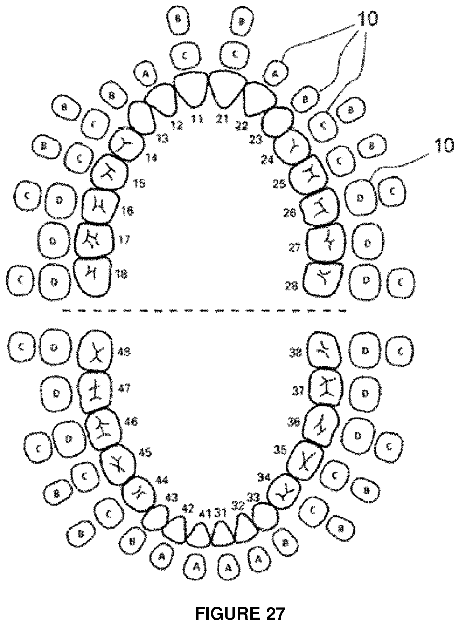

Selon le mode de réalisation choisi, une série d'éléments de cicatrisation 10 de formes différentes va permettre de reproduire au mieux ces différentes formes. La figure 27 représente ainsi une vue de dessus des sections de toutes les dents et une vue de dessus d'éléments de cicatrisation 10 associés à chaque dent. Les formes des différentes séries de dents, numérotées de 11 à 18, de 21 à 28, de 31 à 38 et de 41 à 48 sur cette figure, ces numéros ne devant pas être confondus avec les références numériques utilisées par ailleurs sur les autres figures pour désigner les caractéristiques de l'invention, sont toutes approchées par l'intermédiaire de quatre éléments de cicatrisation 10 différents, référencés A à D. Pour certaines dents, voire toutes les dents, plusieurs éléments de cicatrisation, parmi les éléments de cicatrisation A à D, apparaissent adaptés.

Dans l'exemple de réalisation choisi et illustré par la figure 27, les éléments de cicatrisation A sont adaptés pour traiter la restauration des incisives latérales supérieures et toutes les incisives inférieures. Les éléments de cicatrisation B sont adaptés pour la restauration des canines et des prémolaires, les éléments de cicatrisation C sont adaptés pour la restauration des molaires intermédiaires puis les éléments de cicatrisation D sont adaptés pour la restauration des molaires les plus grosses. En variante, la série d'éléments de cicatrisation 10 pourrait comprendre un tout autre nombre d'éléments de cicatrisation différents, par exemple trois ou cinq éléments de cicatrisation différents.

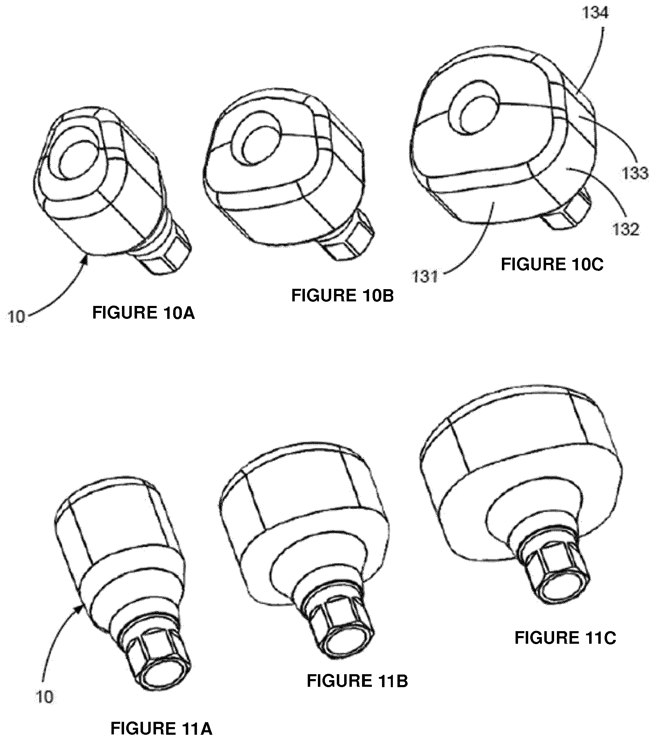

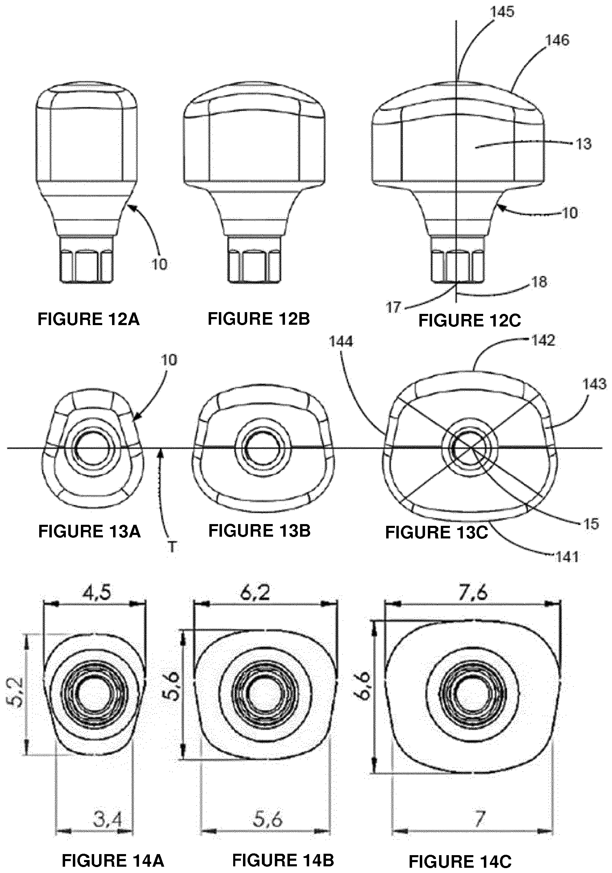

Ces éléments de cicatrisation vont maintenant être décrits plus en détail en considérant une série de trois éléments de cicatrisation A, B et C. L'élément de cicatrisation A est particulièrement illustré par les figures 10A à 14A, l'élément de cicatrisation B par les figures 10b à 14b et l'élément de cicatrisation C par les figures 10c à 14c. Pour ne pas alourdir les figures, les références numériques ne sont pas reproduites sur tous les éléments de cicatrisation de ces figures, toutefois, tous ces éléments de cicatrisation possèdent les mêmes caractéristiques, qui vont être décrites.

Comme cela ressort des figures 10A à 13C, les surfaces terminales 14 de ces éléments de cicatrisation 10 (A à C), destinées à un positionnement au-dessus de l'émergence gingivale, sont sensiblement planes et destinées à un positionnement parallèle à un plan horizontal (parallèle au plan justagingival PJ, entre 1 et 2 mm inclus au-dessus de ce plan) correspondant au plan de coupe de la figure 25. Elles sont toutefois légèrement bombées, présentant une partie centrale 145, plus particulièrement visible sur les figures 12A à 12C, destinées à s'élever plus au-delà de la gencive que ses parties périphériques 146.

La section transverse de l'élément de cicatrisation, par un plan P perpendiculaire à sa surface latérale 13, comme explicité précédemment, qui donne la forme finale à la gencive après cicatrisation, est sensiblement reproduite par la surface terminale 14 de l'élément de cicatrisation (notamment sa projection sur un plan P), qui vient dans son prolongement. Les sections de tous les éléments de cicatrisation présentent toutes une forme sensiblement trapézoïdale. Elles comprennent un grand côté 141, qui sera disposé du côté de l'extérieur de la bouche (côté vestibulaire), un petit côté 142 opposé parallèle, qui sera disposé du côté de l'intérieur de la bouche (côté lingual), reliés par deux côtés 143, 144. Le croisement des diagonales du trapèze permet de définir un centre 15. De plus, en considérant le centre 17 de l'ouverture 11 sensiblement circulaire de l'élément de cicatrisation 10 au niveau de son extrémité inférieure, il est possible de définir un axe 18 central de l'élément de cicatrisation, passant par les deux points centraux 15, 17. Cet axe 18 de l'élément de cicatrisation 10 est perpendiculaire à la surface terminale 14. L'axe 18 est également confondu avec l'axe de l'ouverture 11 et l'axe longitudinal L de l'implant.

Les trois types d'éléments de cicatrisation 10, A, B et C, diffèrent donc notamment par la forme trapézoïdale de la section transverse de leurs surfaces latérales 13. En fonction de l'élément de cicatrisation considéré, la forme trapézoïdale peut se rapprocher d'une forme triangulaire ou d'une forme rectangulaire, voire d'une forme carrée. A titre d'exemples de réalisation, les figures 14A à 14C donnent des ordres de grandeur des dimensions de ces éléments de cicatrisation, en millimètres.

Naturellement, cette forme sensiblement trapézoïdale retenue présente des angles arrondis et des côtés courbés, pour garantir de ne pas heurter la gencive. De plus, la surface terminale 14 de chaque élément de cicatrisation présente, à l'exception de l'ouverture 11, une surface continue, sans reliefs, et/ou sans partie creuse, et/ou sans gorge, et/ou sans arrête, et/ou sans aspérité. Cette surface est convexe. Cette géométrie sans aspérité est favorable à l'hygiène buccale, réduit l'accumulation d'aliments et le dépôt de la plaque dentaire. En remarque, lorsque l'élément de cicatrisation est fixé seul sur un implant par l'intermédiaire d'une vis 40, la tête 41 de la vis complète la surface terminale 14, qui devient sensiblement continue, même au niveau de l'ouverture 11. Ainsi, cette surface fermée par la tête de vis présente alors sensiblement la propriété de surface continue, sans reliefs, et/ou sans partie creuse, et/ou sans gorge, et/ou sans arrête, et/ou sans aspérité. Cette architecture rend optimale l'utilisation d'un élément de cicatrisation seul. En complément, l'étanchéité est assurée au niveau de l'interface entre la tête 41 de vis 40 et la surface terminale 14.

En variante, la série d'éléments de cicatrisation pourrait comprendre un nombre différents de géométries différentes, par exemple au moins deux. Dans une variante de réalisation simplifiée, une seule forme d'élément de cicatrisation pourrait convenir pour toutes les dents.

Selon d'autres variantes de réalisation, la section transverse d'un élément de cicatrisation au niveau de sa surface latérale 13 pourrait s'approcher de tout polygone, comme un polygone à trois, cinq ou six côtés. En variante, les angles de ces polygones pourraient être si arrondis que la forme globale s'approcherait d'une forme oblongue, voire de section d'ovoïde, voire de toute autre forme plus éloignée d'un polygone. Avantageusement, cette forme comprend au moins un centre ou point parfaitement défini géométriquement pour définir un centre 15, voire un éventuel axe 18 de l'élément de cicatrisation. Cette section transverse est obtenue par un plan de coupe sensiblement parallèle au plan justogingival.

Selon le mode de réalisation, la géométrie de la surface émergente visible de l'élément de cicatrisation du côté de l'intérieur de la bouche diffère de la géométrie du côté de l'extérieur, pour tenir compte de la courbure de la gencive. Cette forme de la surface émergente de l'élément de cicatrisation est donc asymétrique par rapport à un plan médian contenant la tangente T à la gencive, représentée sur les figures 13A à 13C, et plus précisément sur la figure 25 en considérant une dent 50 à restaurer. Ce plan médian, dit plan tangent T, est parallèle à la tangente T à la gencive, perpendiculaire au plan justagingival PJ, passe au milieu 15 d'un élément de cicatrisation. Autrement dit, la géométrie de la surface émergente visible de l'élément de cicatrisation du côté de l'intérieur de la bouche diffère de la géométrie du côté de l'extérieur, pour tenir compte de la courbure de la gencive ou de la forme naturelle des dents. Notamment, la hauteur suivant l'axe longitudinal de l'élément de cicatrisation du côté lingual, c'est-à-dire du côté de l'intérieur de la bouche, peut être supérieure à la hauteur de l'élément de cicatrisation du côté de l'extérieur de la bouche. La forme de la surface émergente de l'élément de cicatrisation est donc asymétrique par rapport à un plan parallèle à l'axe longitudinal et passant par le centre 113 de la surface terminale 111. D'une part cette asymétrie peut être caractérisée par des formes différentes de l'élément de cicatrisation de part et d'autre du plan en considérant une projection de l'élément de cicatrisation sur un plan perpendiculaire à l'axe longitudinal. D'autre part, cette asymétrie peut être caractérisée par des hauteurs différentes de l'élément de cicatrisation de part et d'autre du plan. Un exemple d'une telle asymétrie est particulièrement visible sur la figure 21.

Ainsi, une forme circulaire pour la section d'un élément de cicatrisation, associée par exemple à un élément de cicatrisation cylindrique, est inadaptée. Plus généralement, toute courbe plane présentant une symétrie autour d'un point ou d'un axe est peu ou pas adaptée pour la section susmentionnée de l'élément de cicatrisation, car d'une part, elle ne serait pas adaptée à l'anatomie de la bouche et, d'autre part, son orientation circulaire autour de cet axe ne serait plus identifiable. Pour les mêmes raisons, la surface émergente et visible de l'élément de cicatrisation n'est donc pas symétrique par rapport à au moins un, ou même plusieurs plans parallèles à son axe 18, et/ou comprenant cet axe 18. Elle n'est pas symétrique par rapport à au moins un, ou plusieurs plans perpendiculaires à la surface émergente et passant par son centre 15, que nous appelons plans médians perpendiculaires. Dans l'exemple représenté, seul le plan perpendiculaire au plan tangent T mentionné, passant au milieu des deux côtés 141, 142, forme un plan de symétrie. Les remarques précédentes s'appliquent à la surface émergente de l'élément de cicatrisation, ou à sa section transverse par un plan de coupe P défini précédemment, ou à la projection de sa surface émergente sur un tel plan P (parallèle au plan justogingival). Le plan médian perpendiculaire est alors tout plan perpendiculaire au plan P et passant au centre de la géométrie considérée de l'élément de cicatrisation. Alternativement, un plan médian perpendiculaire peut se définir comme tout plan contenant l'axe 18 de l'élément de cicatrisation. Cette surface émergente d'un élément de cicatrisation peut finalement prendre toute forme tridimensionnelle identifiable, permettant de reconnaître l'élément de cicatrisation utilisé et éventuellement de connaître son orientation, pour remplir une seconde fonction qui sera détaillée par la suite.

Les surfaces terminales 14 des éléments de cicatrisation sont prolongées à partir de leur périphérie 146 par la surface latérale 13 autour de laquelle se cicatrise la gencive, et qui donne ainsi la forme de gencive adaptée à la future prothèse. Cette surface latérale 13 présente plusieurs surfaces 131, 132, 133, 134, sensiblement planes, éventuellement légèrement courbées, s'étendant selon une direction sensiblement parallèle à l'axe 18 de l'élément de cicatrisation et/ou parallèlement à l'axe longitudinal L de l'implant, en prolongeant respectivement les différents côtés 141, 142, 143, 144 de la surface terminale 14 de l'élément de cicatrisation. Les interfaces entre la surface terminale 14 et ces différentes parties de la surface latérale 13 sont réalisées par des surfaces arrondis, sans aspérité, notamment convexes.

L'élément de cicatrisation peut se trouver en matériau plastique, compatible avec une utilisation médicale, et de couleur rose, blanche ou crème. En particulier l'élément de cicatrisation peut être fabriqué à partir d'un matériau polymère, notamment à partir d'un matériau « PEEK ». En variante, il peut être en métal, par exemple en titane, ou peut être en zircone. Effectivement, cet élément de cicatrisation 10 peut être en titane avec un traitement de surface réalisé à partir de nitrure de zircone afin notamment d'améliorer la visibilité de cet élément 10 par des scanners buccaux et ce, tout en étant biocompatible. L'élément de cicatrisation peut être fabriqué par usinage et/ou par moulage et/ou par addition de matière, autrement dit par impression 3D.

L'utilisation des éléments de cicatrisation permet donc de favoriser une cicatrisation idéale de la gencive dans le cadre d'un procédé de restauration dentaire du fait de sa géométrie conçue en phase avec l'anatomie buccale. En remarque, cet élément de cicatrisation peut en variante être totalement sous-gingival et invisible, puis rendu visible par intervention sur la gencive. Dans ce cas, la partie extrême de l'élément de cicatrisation sera toujours appelée abusivement partie émergente.

On notera que l'ensemble de prise d'empreinte dentaire 1 peut comprendre un élément d'obturation amovible par exemple une vis, prévu pour fermer de manière étanche et hermétique l'ouverture traversante 11 de l'élément de cicatrisation 10 au niveau de la surface terminale 14. Ainsi que nous l'avons vu précédemment, cet ensemble de prise d'empreinte dentaire 1 comprenant un élément de cicatrisation 10 apte à une connexion avec un implant dentaire 60, comporte l'élément de transfert d'empreinte amovible 2 et un porte-empreinte. Cet élément de transfert d'empreinte 2 est pourvu d'une partie de fixation 4 comprenant au moins un élément d'ancrage 7b et une partie de liaison 5. En remarque, ce caractère amovible permet le seul retrait de l'élément de transfert d'empreinte amovible 2, l'élément de cicatrisation restant bien en bouche, fixé sur un implant. La liaison entre cet élément de transfert d'empreinte amovible 2 et l'élément de cicatrisation peut être différente. Toutefois, l'élément de cicatrisation comprend de préférence une partie de liaison femelle (notamment au sein de son ouverture 11), et l'élément de transfert d'empreinte amovible 2 une partie de liaison mâle correspondante. En effet, une partie de liaison mâle sur l'élément de cicatrisation formerait une surface terminale peu adaptée pour rester seule en bouche. En remarque complémentaire, il apparait naturellement dans tous ces modes de réalisation que l'élément de transfert d'empreinte amovible 2 est distinct de l'élément de cicatrisation. De plus, il est apte à une fixation directe sur cet élément de cicatrisation.

Cette partie de fixation 4 de l'élément de transfert d'empreinte 2 est susceptible de coopérer avec un matériau d'empreinte du porte-empreinte dudit ensemble 10. Ainsi, dans ce contexte, l'élément de transfert d'empreinte 2 permet de reporter/transposer dans le matériau d'empreinte la position exacte de l'ensemble de cicatrisation formé par l'implant 60 et l'élément de cicatrisation 10 dans la mâchoire du patient mais également le relief précis de la gencive définie autour de l'élément de cicatrisation 10 en particulier de sa surface latérale 13.

Dans cet ensemble de prise d'empreinte 1, le porte-empreinte est un outil permettant d'enregistrer par empreinte dans le matériau de prise d'empreinte tel qu'une pâte appropriée, les volumes des arcades dentaires du patient en particulier celle du maxillaire inférieur et supérieur. Ce porte-empreinte est donc adapté pour porter dans la cavité buccale du patient ladite pâte nécessaire pour réaliser les enregistrements précités. Cette pâte peut être de préférence du silicone, alginate, hydrocolloïde, etc...

Ce porte-empreinte est une pièce monobloc soit en métal, soit en matière plastique dite jetable et pouvant être du type « *porte-empreinte à ciel fermé* ». Il est obligatoirement rigide pour éviter toutes déformations lors de sa mise en place ou de son enlèvement de la bouche du patient. Ce porte-empreinte est adapté à l'anatomie de la mandibule et du maxillaire du patient qui peut être denté ou édenté, partiellement ou totalement et comprendre au moins un élément de transfert d'empreinte 2 monté sur un ensemble de cicatrisation. Autrement dit, il est adapté à la prise d'une empreinte sectorielle ou totale de la mâchoire supérieure ou inférieure.

Ce porte-empreinte peut comporter une gouttière en forme générale d'arche à tronçon incurvé central prolongé de part et d'autre par deux branches latérales. Cette gouttière peut être formée d'une paroi de fond bordée longitudinalement par deux parois latérales, intérieure et extérieure de sorte à définir une gorge réceptrice pouvant être remplie du matériau de prise d'empreinte.

Dans cet ensemble de prise d'empreinte 1, la partie de fixation 4 comprend une première composante 7a s'étendant longitudinalement et qui est essentiellement cylindrique et une deuxième composante 7b comprenant au moins un élément d'ancrage, en particulier deux dans le présent mode de réalisation décrit. Chaque élément d'ancrage est défini sur une paroi périphérique externe de cette première composante 7a notamment au niveau d'une extrémité libre de cette partie de fixation 4. L'élément d'ancrage peut être par exemple une ailette de rétention. Cette ailette de rétention a une section transversale qui a de manière non limitative essentiellement la forme d'un quadrilatère. Cette ailette de rétention comprend des faces inférieure et supérieure qui sont parallèles et opposées entre elles ainsi que des première et deuxième faces latérales également parallèles et opposées entre elles et qui relient en partie ces faces supérieure et inférieure l'une à l'autre. Une telle ailette de rétention peut comporter une région chanfreinée comprise dans un bord dudit élément d'ancrage, lequel bord étant localisé entre la face supérieure et la deuxième face latérale. L'ailette de rétention peut également comprendre un plan médian P1 parallèle aux faces inférieure et supérieure de cette ailette qui est sensiblement perpendiculaire à un axe longitudinal A2 de la première composante 7a de cette partie de fixation 4.

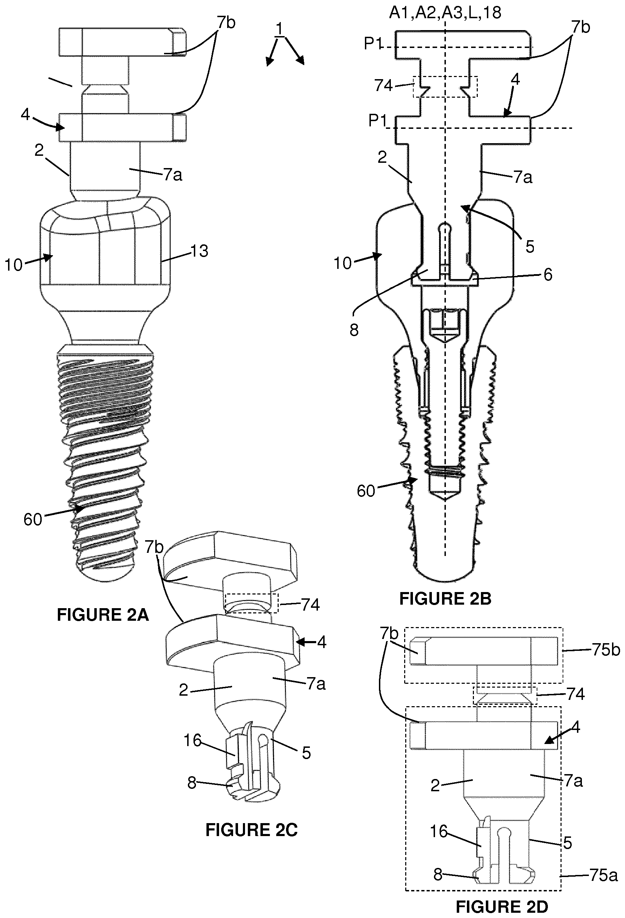

Lorsque comme dans le présent mode de réalisation, la partie de fixation 4 comprend plusieurs éléments d'ancrage en particulier deux, ceux-ci sont alors agencés dans cette partie 4 en étant superposées les unes par rapport aux autres en partant de l'extrémité libre jusqu'à l'autre extrémité de cette partie 4 le cas échéant et ce, avec un écart défini entre eux qui est non nul. Dans cette partie de fixation 4, le corps traverse des régions des faces inférieure et supérieure de chaque élément d'ancrage situées à proximité de la première face latérale de ce dernier. Dans cette configuration et en référence aux figures 2A à 2D où l'élément de transfert est sécable, la première composante 7a de cette partie de fixation 4 peut être formée de parties 75a, 75b comprenant chacune la deuxième composante 7b formée alors d'un élément d'ancrage. A titre d'exemple, dans le présent mode de réalisation, l'extrémité libre peut être une partie 75b de cette première composante 7a qui peut alors être séparée du reste de celui-ci au niveau d'une zone de séparation 74. Dans cet exemple, l'élément de transfert d'empreinte 2 est alors pourvu d'une première partie 75a et d'une deuxième partie dite haute 75b qui est sécable et qui comprend un élément d'ancrage. Ces première et deuxième parties 75a, 75b forment un ensemble monobloc. Dans une variante de cet exemple, l'élément de transfert d'empreinte 2 est dépourvu de telles première et deuxième parties, et est alors dans ces conditions une pièce monobloc.

Dans cet élément de transfert d'empreinte 2, la partie de liaison 5 comprend un élément anti-rotationnel 16 ainsi qu'une première portion 9a susceptible de prendre appui et/ou d'être en contact avec la surface émergente notamment la surface terminale 14, et une deuxième portion 9b comprenant un élément de fixation 8 définie dans une extrémité libre de cette partie de liaison 5.

Cet élément anti-rotationnel 16 est défini sur tout ou partie d'une région d'une paroi périphérique de cette partie de liaison 5 en s'étendant longitudinalement sur cette région conformément à la direction de l'axe longitudinal A3 de cette partie de liaison 5. Autrement dit, cet élément anti-rotationnel 16 est défini dans tout ou partie des première et deuxième portions 9a, 9b. Lorsque l'élément de transfert 2 est assemblé à l'élément de cicatrisation 10, cet élément anti-rotationnel 16 est agencé dans un logement de positionnement 19 de l'élément de de cicatrisation 10 de sorte à ce qu'une orientation spécifique de cet élément de transfert 2 relativement à l'élément de cicatrisation 10 soit respectée. Cette orientation correspond sensiblement à une direction radiale prédéfinie par rapport à l'axe 18 de l'élément de cicatrisation 10 et/ou l'axe A1 de l'élément de transfert 2. Ce logement de positionnement 19 est une cannelure ménagée dans la paroi de l'ouverture traversante 11 et/ou d'une portée conique 33 de l'élément de cicatrisation 10 définie dans la surface terminale 14, à une extrémité de cette ouverture débouchant dans cette surface terminale 14. Le logement 19 est de préférence situé au-dessus d'une zone de liaison 6 de l'élément de cicatrisation 10. Un tel logement 19 comprend une enceinte ayant une forme complémentaire à celle de l'élément anti-rotationnel 16. On notera de plus que cet élément anti-rotationnel 16 participe à une bonne tenue de l'élément de transfert 2 dans l'élément de cicatrisation 10.

La première portion 9a de cette partie de liaison 5 comporte une face externe prévue pour couvrir tout ou partie de la surface émergente de l'élément de cicatrisation 10. Dans le présent mode de réalisation, cette première portion 9a a une forme tronconique et est apte à coopérer avec la surface terminale 14 et en particulier avec la portée conique 33 définie dans cette surface 14, pour rendre étanche une interface entre l'élément de cicatrisation 10 et l'élément de transfert 2 et ce, afin de réduire à zéro tout jeu en translation entre l'élément de cicatrisation 10 et cet élément de transfert 2.

Dans une variante, cette première portion 9a comprend une face externe qui peut être pourvue d'une cavité définie autour de la deuxième portion 9b, présentant une forme complémentaire à tout ou partie de la surface émergente avec laquelle elle est susceptible d'être en contact et notamment de préférence toute la surface terminale 14 et une partie de la surface latérale 13 jouxtant cette surface terminale 14.

Dans cet ensemble de prise d'empreinte 1, la deuxième portion 9b de la partie de liaison 5 est susceptible de coopérer avec la zone de liaison 6 correspondante définie dans l'ouverture traversante 11 ménagée dans l'élément de cicatrisation 10. Effectivement, une telle deuxième portion 9b qui permet de lier mécaniquement de manière amovible l'élément de transfert 2 à l'élément de cicatrisation 10, comprend notamment au niveau de son extrémité libre, un élément de fixation 8 tel qu'un premier organe de clippage notamment un organe mâle de clippage, ou une partie filetée. Dans ce contexte, lorsque la deuxième portion 9b comprend le premier organe de clippage, ce dernier est alors apte à coopérer avec la zone de liaison 6 telle qu'une gorge/rainure définie dans la paroi de l'ouverture traversante 11 de l'élément de cicatrisation 10 afin de réaliser cette liaison mécanique. Ce premier organe de clippage est compris dans l'extrémité libre de la partie de liaison 5 et comporte plusieurs ailettes flexibles, ici deux, trois ou quatre. Ces ailettes sont espacées les unes des autres d'un écart sensiblement similaire résultant d'un évidemment de matière. De telles ailettes sont susceptibles de passer d'une position de repos à une position de contrainte lorsqu'elles sont déplacées sensiblement radialement par rapport à l'axe A1. Ces ailettes présentent chacune une forme qui est complémentaire à la zone de liaison 6 telle que la gorge avec laquelle elles sont susceptibles de coopérer afin de réaliser cette fixation par clippage. On notera qu'une telle fixation par clippage permet de pouvoir monter et démonter facilement et plusieurs fois l'élément de transfert 2 de l'ensemble de cicatrisation lors de la réalisation d'une prise d'empreinte et ce, afin de pouvoir autoriser une séparation automatique de l'élément de transfert 2 de cet ensemble de cicatrisation lorsque la partie de fixation 4 est fixée dans le matériau de prise d'empreinte compris dans le porte-empreinte notamment à partir dudit au moins un élément d'ancrage 7b. On notera en complément que cette facilité de montage/démontage de l'élément de transfert 2 de l'élément de cicatrisation10 permet également la réalisation d'opérations de polissage et/ou de retouche de cet élément de transfert 2 hors de la bouche du patient lorsque cela est nécessaire. On notera que dans une variante où cet élément de fixation 8 de la partie de liaison 5 comprend une partie filetée, cette dernière est alors apte à coopérer avec une zone de liaison 6 telle qu'une partie taraudée définie dans la paroi de l'ouverture traversante 11 pour la réalisation de cette liaison mécanique.

En complément, l'axe longitudinal A1 de l'élément de transfert 2 s'étendant sur toute sa longueur, est confondu avec des axes longitudinaux A2 et A3 de la première composante 7a de la partie de fixation 4 et de la partie de liaison 5. Cet axe A1 de l'élément de transfert 2 est également confondu avec l'axe L de l'implant 60 et l'axe 18 de l'élément de cicatrisation 10.

Dans ce mode de réalisation, l'élément de transfert 2 peut être fabriqué en matériau plastique, compatible avec une utilisation médicale. En particulier, cet élément de transfert 2 peut être fabriqué à partir d'un matériau polymère, notamment à partir d'un matériau tel que le « PEEK », le « PMMA » ou encore le « POM » pour faciliter les retouches. En variante, il peut être en métal, par exemple en titane, ou peut être en zircone ou en céramique. L'élément de transfert 2 peut être fabriqué par usinage et/ou par moulage et/ou par addition de matière, autrement dit par impression 3D.

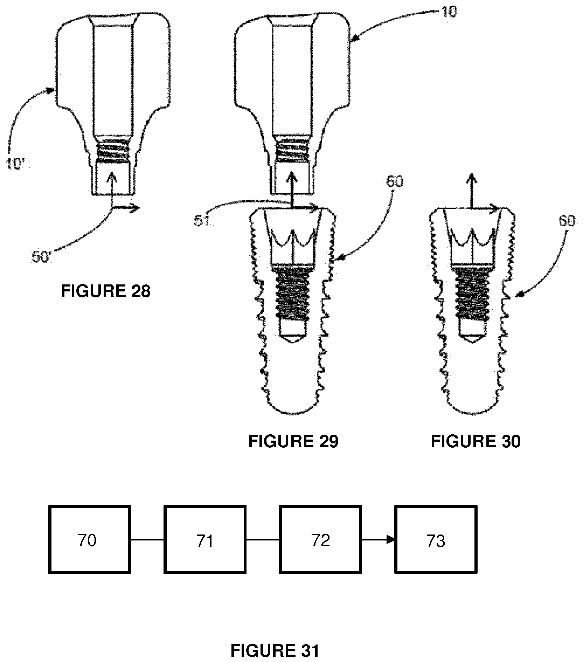

En référence à la figure 31, l'invention concerne également un procédé de prise d'empreinte dentaire à partir d'un tel ensemble de prise d'empreinte dentaire 1.

Ce procédé comprend une étape d'agencement 70 de l'élément de transfert 2 sur l'élément de cicatrisation 10 situé dans la mâchoire supérieure ou inférieure de la cavité buccale du patient. Lors de cette étape 70, l'élément d'obturation prévu pour fermer de manière étanche et hermétique l'ouverture traversante 11 de l'élément de cicatrisation 10, est retiré de cette ouverture traversante 11 afin de la rendre accessible/utilisable. Par la suite, l'élément de transfert 2 est manipulé à partir d'une zone de préhension de ce dernier définie au niveau de la partie de fixation 4 et ce, afin d'être fixé de manière amovible sur l'élément de cicatrisation 10. Plus précisément, durant le déroulement de cette étape 70, l'élément de transfert 2 est manipulé de manière à ce que sa partie de liaison 5 et plus spécifiquement l'élément de fixation 8 est inséré dans l'ouverture traversante 11 jusqu'à atteindre la zone de fixation 6 avec laquelle il est susceptible de coopérer pour assurer une liaison mécanique amovible entre l'élément de transfert 2 et l'élément de cicatrisation 10. Par exemple dans le cas où cet élément de fixation 8 comprend les ailettes flexibles celles-ci sont alors aptes lors de cette insertion à entrer en contact avec la paroi de l'ouverture traversante 11 et à passer alors de la position de repos à la position de contrainte en effectuant un déplacement sensiblement radial en direction de l'axe A1 de l'élément de transfert 2. Lorsque ces ailettes flexibles atteignent la zone de fixation 6 ménagée dans l'ouverture traversante 11, elles effectuent alors un déplacement radial inverse en passant de la position de contrainte vers la position de repos et ce, en s'éloignant de l'axe A1. On notera que durant cette étape 70, l'élément de transfert 2 est orienté relativement à l'élément de cicatrisation 10 de manière à ce que l'élément anti-rotationnel 16 soit agencé dans le logement de positionnement 19 de l'élément de cicatrisation 10.

Le procédé comprend ensuite une étape de mise en place 71 du porte-empreinte comportant un matériau de prise d'empreinte sur ladite mâchoire de sorte que la partie de fixation 4 dudit élément de transfert 2 est comprise dans ledit matériau de prise d'empreinte. Lors de cette étape 71, un matériau telle qu'une pâte, différent du matériau de prise d'empreinte compris dans le porte-empreinte, peut être préalablement appliqué au niveau de la partie édentée de la mâchoire où sont localisés la surface émergente de l'élément de cicatrisation 10 et l'élément de transfert 2. Par la suite, le porte-empreinte est inséré dans la cavité buccale pour être appliqué fermement sur la mâchoire correspondante et ce, de manière à ce que ledit au moins un élément d'ancrage soit inséré dans ce matériau de prise d'empreinte.

Par la suite, le procédé prévoit une étape de retrait 72 du porte-empreinte comprenant tout ou partie de l'élément de transfert 2 de ladite mâchoire. Lors de cette étape de retrait 72, l'élément de transfert 2 est alors désassemblé sensiblement automatiquement de l'élément de cicatrisation 10 notamment par déclippage lorsque l'élément de fixation 8 et la zone de fixation 6 comprennent respectivement les premier et deuxième organes de clippage.

Dans la variante où l'élément de fixation 8 de la partie de liaison 5 comprend une partie filetée apte à coopérer avec une zone de liaison 6 telle que la partie taraudée définie dans la paroi de l'ouverture traversante 11 pour la réalisation d'une liaison mécanique, l'élément de transfert 2 est alors de préférence sécable pour la mise en œuvre d'une telle étape 72. Dans ces conditions, une telle étape 72 peut prévoir que lors du retrait du porte-empreinte de ladite mâchoire, seule la première partie 75a dite *« partie haute* » de l'élément de transfert 2 est alors comprise dans le matériau de prise d'empreinte. Effectivement, lors de cette étape de retrait 72, la partie haute 75a de l'élément de transfert 2 est alors désassemblée sensiblement automatiquement de la deuxième partie 75b de cet élément de transfert 2 qui reste quant à elle fixée sur l'élément de cicatrisation 10. Cette deuxième partie 75b est ensuite désassemblée manuellement de cet élément de cicatrisation 10 lors d'une opération de dévissage afin d'être fixé notamment par clippage dans la partie haute 75a de cette variante de l'élément de transfert 2 alors comprise dans le matériau de prise d'empreinte et ce, après que le porte empreinte ait été extrait de la cavité buccale.

Le procédé comprend ensuite une étape d'obturation 73 de l'ouverture traversante 11 de l'élément de cicatrisation10. Lors de cette étape 73, l'élément d'obturation est monté dans l'ouverture traversante 11 de cet élément de cicatrisation 10, afin de la fermer de manière étanche et hermétique. Cet élément d'obturation peut être la vis 40 mentionnée précédemment.

Ainsi sur la base de l'empreinte de la mâchoire ainsi définie dans le matériau de prise d'empreinte compris dans le porte-empreinte, un modèle de mâchoire par exemple en plâtre correspondant à une reproduction de la mâchoire du patient, peut être réalisé.

En effet, un ensemble de cicatrisation clone est relié mécaniquement à la partie de liaison 5 de l'élément de transfert 2 qui est visible dans le matériau compris dans le porte-empreinte. Par la suite, une substance semi-fluide est coulée dans une partie de l'empreinte définie dans le matériau de prise d'empreinte dans laquelle sont compris l'ensemble de cicatrisation clone et l'élément de transfert 2. Cette substance est prévue pour reproduire sur le modèle de mâchoire, la gencive définie autour de la surface émergente de l'élément de cicatrisation 10 agencé dans la mâchoire du patient. Ensuite, une pâte telle du plâtre est alors coulée dans l'empreinte définie dans le matériau afin d'obtenir le modèle de mâchoire reproduisant celle du patient comprenant l'ensemble de cicatrisation après des phases de séchage et de démoulage.

En remarque, le matériau de prise d'empreinte s'étend autour de la gencive et notamment aussi autour de la partie émergente de l'élément de cicatrisation. Le volume de cet élément est donc reproduit sur le modèle de mâchoire. Comme l'élément de cicatrisation est asymétrique, comprend une forme tridimensionnelle identifiable, comme explicité précédemment, la forme de cet élément permet de l'identifier et donc de connaitre toute sa géométrie, puis d'en déduire précisément, de manière indirecte, des informations sur l'emplacement de l'implant, ce qui est très utile pour la phase de construction de la restauration dentaire. Pour faciliter cette fonction, on note que l'élément de prise d'empreinte ne recouvre pas totalement la partie émergente de l'élément de cicatrisation.

Ainsi, l'invention offre la possibilité dans le cadre d'une restauration dentaire mettant en œuvre un implant 60, de réaliser une prise d'empreinte dans la cavité buccale du patient sans qu'il soit nécessaire de démonter l'élément de cicatrisation 10 de l'implant 60 de sorte à préserver l'attache épithéliale des tissus mous à la partie transmuqueuse de cet élément de cicatrisation 10. Ainsi, les tissus mous ne subissent aucune agression et le joint biologique autour de la future prothèse définitive est également protégé du fait de l'absence de toute résorption de la gencive.

Avantageusement ainsi que nous l'avons évoqué, la partie de fixation 4 peut définir une zone de préhension de l'élément de transfert 2 permettant de le manipuler de sorte à assurer son montage/démontage de l'ensemble de cicatrisation. De plus, on notera que cet élément de transfert 2 peut être facilement enlevé de la cavité buccale du patient afin que des opérations de retouche ou encore de polissage de cet élément de transfert 2 puissent être réalisées.

## Revendications

1. Ensemble de prise d'empreinte dentaire (1) comprenant un élément de cicatrisation (10) apte à une connexion avec un implant dentaire (60), comportant une surface latérale (13) destinée à une intégration au sein d'une gencive pour mettre en forme la gencive lors de sa cicatrisation, et une surface terminale (14) formant avec une partie de ladite surface latérale (13) une surface émergente, destinée à rester hors de la gencive, qui est asymétrique par rapport à au moins un plan médian (P) perpendiculaire, ledit ensemble (1) comprend un élément de transfert d'empreinte amovible (2) comprenant une partie de fixation (4) à un matériau de prise d'empreinte d'un porte-empreinte dudit ensemble (1) et une partie de liaison (5) susceptible de coopérer avec une zone de liaison (6) complémentaire définie dans une ouverture traversante (11) ménagée dans ledit élément de cicatrisation (10), et **caractérisé en ce que** l'élément de cicatrisation (10) peut occuper une configuration dans laquelle il est apte à être fixé seul à un implant par une vis (40), sans élément de transfert d'empreinte amovible (2), la surface émergente de l'élément de cicatrisation (10) complétée par une tête (41) de la vis (40) présentant une surface continue sans aspérité dans cette configuration.

2. Ensemble (1) selon la revendication précédente, **caractérisé en ce que** dans la configuration où l'élément de cicatrisation est fixé seul sur un implant, la tête (41) de la vis (40) vient se noyer dans l'élément de cicatrisation et ne dépasse pas de la face terminale (14) de l'élément de cicatrisation (10).

3. Ensemble (1) selon l'une des revendications précédentes, **caractérisé en ce que** des première et deuxième parties de la surface émergente destinées respectivement à un positionnement orienté vers l'intérieur et vers l'extérieur de la bouche présentent une forme différente.

4. Ensemble (1) selon l'une quelconque des revendications précédentes, **caractérisé en ce qu'**une section transverse de la surface latérale (13) ou une projection sur un plan parallèle de la surface émergente présente :
▪ une forme sensiblement trapézoïdale ou une forme sensiblement polygonale, ou triangulaire, ou carrée, ou rectangulaire, ou ovoïde, ou une forme sensiblement polygonale avec des angles arrondis ; et/ou
▪ une deuxième partie destinée à un positionnement orienté vers l'extérieur de la bouche de plus grande dimension qu'une première partie destinée à un positionnement orienté vers l'intérieur.

5. Ensemble (1) selon l'une des revendications 1 ou 2, **caractérisé en ce que** la surface terminale (14) et/ou la surface émergente présente :
▪ une surface non plane, courbée ; et/ou
▪ une surface convexe ; et/ou
▪ une surface sans aspérité notamment à l'exception de
l'ouverture traversante (11), ou
**caractérisé en ce que** la surface terminale (14) et/ou la surface émergente de l'élément de cicatrisation (10) complétée par une tête (41) de vis (40) lorsque l'élément de cicatrisation (10) est fixé seul par une vis (40), présente une surface, sans reliefs, et/ou sans partie creuse, et/ou sans gorge, et/ou sans arrête, et/ou convexe.

6. Ensemble (1) selon l'une quelconque des revendications précédentes, **caractérisé en ce que** la surface émergente de l'élément de cicatrisation présente une forme tridimensionnelle identifiable, permettant automatiquement sa reconnaissance, son positionnement, et/ou son orientation et indirectement le positionnement et l'orientation de l'implant, sans marqueur, par reproduction de tout ou partie de cette surface émergente sur un matériau de prise d'empreinte.

7. Ensemble (1) selon l'une quelconque des revendications précédente, **caractérisé en ce que** l'élément de cicatrisation (10) est un capuchon qui comprend une ouverture dans une surface opposée à la surface terminale (14).

8. Ensemble (1) selon l'une quelconque des revendications précédentes, **caractérisé en ce que** la partie de fixation (4) comprend une première composante (7a) essentiellement cylindrique et une deuxième composante (7b) comprenant au moins un élément d'ancrage notamment deux éléments d'ancrage.

9. Ensemble (1) selon la revendication précédente, **caractérisé en ce que**:
- ledit au moins un élément d'ancrage est défini sur une paroi périphérique externe de la première composante (7a) notamment au niveau d'une extrémité libre de la partie de fixation (4), et/ou
- ledit au moins un élément d'ancrage a une section transversale ayant essentiellement la forme d'un quadrilatère, et/ou
- un plan médian (P1) dudit élément d'ancrage est sensiblement perpendiculaire à un axe longitudinal (A1) de l'élément de transfert (2).

10. Ensemble (1) selon l'une quelconque des revendications précédentes, **caractérisé en ce que** la partie de liaison (5) comprend une première portion (9a) susceptible de prendre appui et/ou d'être en contact avec la surface émergente notamment la surface terminale (14) et une deuxième portion (9b) comprenant un élément de fixation (8) définie dans une extrémité libre de cette partie de liaison (5).

11. Ensemble (1) selon l'une quelconque des revendications précédentes, **caractérisé en ce que** l'élément de transfert (2) comprend un élément anti-rotationnel (16) défini sur tout ou partie d'une région d'une paroi périphérique de cette partie de liaison (5) en s'étendant longitudinalement sur cette région conformément à un axe longitudinal (A3) de cette partie de liaison (5).

12. Ensemble (1) selon l'une quelconque des revendications précédentes, **caractérisé en ce que** l'élément de cicatrisation (10) comprend un logement de positionnement (19) dudit élément de transfert (2) dans une direction radiale prédéfinie par rapport à un axe longitudinal (A1) de cet élément de transfert (2).

13. Ensemble (1) selon l'une quelconque des revendications précédentes, **caractérisé en ce que** l'élément de transfert (2) est une pièce monobloc et/ou **en ce que** l'élément de cicatrisation (10) est une pièce monobloc.

14. Ensemble (1) selon l'une quelconque des revendications 1 à 12, **caractérisé en ce que** l'élément de transfert (2) comprend une première partie et une deuxième partie dite haute qui est sécable pourvue d'un élément d'ancrage, lesdites première et deuxième parties formant un ensemble monobloc.

15. Procédé de prise d'empreinte dentaire à partir d'un ensemble de prise d'empreinte dentaire (1) selon l'une quelconque des revendications précédentes, comprenant une étape d'agencement (70) d'un élément de transfert d'empreinte amovible (2) sur un élément de cicatrisation (10) situé dans une mâchoire supérieure ou inférieure d'une cavité buccale et une étape de mise en place (71) d'un porte-empreinte comportant un matériau de prise d'empreinte sur ladite mâchoire de sorte qu'une partie de fixation (4) dudit élément de transfert (2) est comprise dans ledit matériau de prise d'empreinte et au moins une partie de la surface émergente de l'élément de cicatrisation est comprise dans ledit matériau de prise d'empreinte.

## Patentansprüche

1. Satz zum Zahnabformen (1), beinhaltend ein Heilungselement (10), das für eine Verbindung mit einem Zahnimplantat (60) geeignet ist und Folgendes umfasst:
eine seitliche Oberfläche (13), die zur Integration in das Zahnfleisch bestimmt ist, um das Zahnfleisch während der Heilung in Form zu bringen, und eine Endoberfläche (14), die zusammen mit einem Teil der seitlichen Oberfläche (13) eine austretende Oberfläche bildet, die dazu bestimmt ist, außerhalb des Zahnfleisches zu bleiben,
und die mit Bezug auf mindestens eine senkrechte Medianebene (P) asymmetrisch ist, wobei der Satz (1) ein entfernbares Abformungstransferelement (2) beinhaltet,
das einen Teil zur Befestigung (4) an einem Abformmaterial eines Abformträgers des Satzes (1) und
einen Verbindungsteil (5) beinhaltet, der mit einem komplementären Verbindungsbereich (6) zusammenwirken kann, der in einer Durchgangsöffnung (11), die in dem Heilungselement (10) eingebracht ist, definiert ist, und
**dadurch gekennzeichnet, dass** das Heilungselement (10) eine Konfiguration einnehmen kann, in der es dazu fähig ist, alleine und ohne entfernbares Abformungstransferelement (2) durch eine Schraube (40) an einem Implantat befestigt zu sein, wobei die austretende Oberfläche des Heilungselements (10), die durch einen Kopf (41) der Schraube (40) vervollständigt wird, in dieser Konfiguration eine durchgehende Oberfläche ohne Unebenheiten aufweist.

2. Satz (1) nach dem vorhergehenden Anspruch, **dadurch gekennzeichnet, dass** in der Konfiguration, in der das Heilungselement alleine an einem Implantat befestigt ist, der Kopf (41) der Schraube (40) in das Heilungselement eindringt und nicht über die Endoberfläche (14) des Heilungselements (10) hinausragt.

3. Satz (1) nach einem der vorhergehenden Ansprüche, **dadurch gekennzeichnet, dass** ein erster und ein zweiter Teil der austretenden Oberfläche, die jeweils für eine Positionierung, die zur Innenseite bzw. zur Außenseite des Mundes gerichtet ist, bestimmt sind, eine unterschiedliche Form aufweisen.

4. Satz (1) nach einem der vorhergehenden Ansprüche, **dadurch gekennzeichnet, dass** ein Querschnitt der seitlichen Oberfläche (13) oder eine Projektion auf eine zu der austretenden Oberfläche parallele Ebene Folgendes aufweist:
• eine im Wesentlichen trapezförmige Form oder eine im Wesentlichen polygonale oder dreieckige oder quadratische oder rechteckige oder ovale Form oder eine im Wesentlichen polygonale Form mit abgerundeten Ecken; und/oder
• einen zweiten Teil, der für eine Positionierung, die zur Außenseite des Mundes gerichtet ist, bestimmt ist, der größer als ein erster Teil ist, der für eine Positionierung, die zur Innenseite gerichtet ist, bestimmt ist.

5. Satz (1) nach einem der Ansprüche 1 oder 2, **dadurch gekennzeichnet, dass** die Endoberfläche (14) und/oder die austretende Oberfläche Folgendes aufweist:
• eine nicht ebene, gekrümmte Oberfläche; und/oder
• eine konvexe Oberfläche; und/oder
• eine Oberfläche ohne Unebenheiten, insbesondere mit Ausnahme der Durchgangsöffnung (11), oder
**dadurch gekennzeichnet, dass** die Endoberfläche (14) und/oder die austretende Oberfläche des Heilungselements (10), die, wenn das Heilungselement (10) alleine durch eine Schraube (40) befestigt ist, durch einen Kopf (41) einer Schraube (40) vervollständigt wird, eine Oberfläche ohne Erhebung und/oder ohne einen hohlen Teil und/oder ohne Nut und/oder ohne Grat und/oder eine konvexe Oberfläche aufweist.

6. Satz (1) nach einem der vorhergehenden Ansprüche, **dadurch gekennzeichnet, dass** die austretende Oberfläche des Heilungselements eine identifizierbare dreidimensionale Form aufweist, die ihre Erkennung, ihre Positionierung und/oder ihre Ausrichtung automatisch und die Positionierung und die Ausrichtung des Implantats indirekt gestattet, ohne Markierungen, durch Reproduktion der gesamten oder eines Teils dieser austretenden Oberfläche in einem Abformmaterial.

7. Satz (1) nach einem der vorhergehenden Ansprüche, **dadurch gekennzeichnet, dass** das Heilungselement (10) eine Kappe ist, die in einer Oberfläche, die der Endoberfläche (14) gegenüberliegt, eine Öffnung beinhaltet.

8. Satz (1) nach einem der vorhergehenden Ansprüche, **dadurch gekennzeichnet, dass** der Befestigungsteil (4) eine erste im Wesentlichen zylindrische Komponente (7a) und eine zweite Komponente (7b) beinhaltet, die mindestens ein Verankerungselement, insbesondere zwei Verankerungselemente beinhaltet.

9. Satz (1) nach dem vorhergehenden Anspruch, **dadurch gekennzeichnet, dass**:
- das mindestens eine Verankerungselement auf einer äußeren Umfangswand der ersten Komponente (7a), insbesondere im Bereich eines freien Endes des Befestigungsteils (4), definiert ist, und/oder
- das mindestens eine Verankerungselement einen Querschnitt aufweist, der im Wesentlichen die Form eines Vierecks aufweist, und/oder
- eine Medianebene (P1) des Verankerungselements zu einer Längsachse (A1) des Transferelements (2) im Wesentlichen senkrecht ist.

10. Satz (1) nach einem der vorhergehenden Ansprüche, **dadurch gekennzeichnet, dass** der Verbindungsteil (5) Folgendes beinhaltet: einen ersten Abschnitt (9a), der sich auf der austretenden Oberfläche, insbesondere der Endoberfläche (14), abstützen und/oder mit dieser in Kontakt sein kann, und einen zweiten Abschnitt (9b) mit einem Befestigungselement (8), der in einem freien Ende dieses Verbindungsteils (5) definiert ist.

11. Satz (1) nach einem der vorhergehenden Ansprüche, **dadurch gekennzeichnet, dass** das Transferelement (2) ein Verdrehschutzelement (16) beinhaltet, das in einer gesamten oder einem Teil einer Region einer Umfangswand dieses Verbindungsteils (5) definiert ist und sich gemäß einer Längsachse (A3) dieses Verbindungsteils (5) längs in dieser Region erstreckt.

12. Satz (1) nach einem der vorhergehenden Ansprüche, **dadurch gekennzeichnet, dass** das Heilungselement (10) eine Aufnahme zur Positionierung (19) des Transferelements (2) in einer radialen Richtung, die mit Bezug auf eine Längsachse (A1) dieses Transferelements (2) vordefiniert ist, beinhaltet.

13. Satz (1) nach einem der vorhergehenden Ansprüche, **dadurch gekennzeichnet, dass** das Transferelement (2) ein einstückiges Teil ist und/oder dass das Heilungselement (10) ein einstückiges Teil ist.

14. Satz (1) nach einem der Ansprüche 1 bis 12, **dadurch gekennzeichnet, dass** das Transferelement (2) einen ersten Teil und einen zweiten sogenannten oberen Teil beinhaltet, welcher abtrennbar ist und über ein Verankerungselement verfügt, wobei der erste und der zweite Teil einen einstückigen Satz bilden.

15. Verfahren zum Zahnabformen mit Hilfe eines Satzes zum Zahnabformen (1) nach einem der vorhergehenden Ansprüche, beinhaltend einen Schritt des Anordnens (70) eines entfernbaren Abformungstransferelements (2) auf einem Heilungselement (10), das sich in einem Ober- oder Unterkiefer einer Mundhöhle befindet, und einen Schritt des Anbringens (71) eines Abformträgers, der ein Abformmaterial umfasst, auf dem Kiefer, sodass ein Befestigungsteil (4) des Transferelements (2) in dem Abformmaterial enthalten ist und mindestens ein Teil der austretenden Oberfläche des Heilungselements in dem Abformmaterial enthalten ist.

## Claims

1. Assembly (1) for taking a dental impression, comprising a healing element (10) adapted for connection to a dental implant (60) and having a lateral surface (13), intended for integration within a gum in order to shape the gum during its healing, and an end surface (14) forming with part of said lateral surface (13) an emergent surface which is intended to remain outside the gum and which is asymmetrical with respect to at least one perpendicular median plane (P), which assembly (1) comprises a removable impression transfer element (2) comprising a part (4) for fixing to an impression material of an impression tray of said assembly (1) and a connecting part (5) able to cooperate with a complementary connecting zone (6) defined in a through-opening (11) formed in said healing element (10), and **characterized in that** the healing element (10) can occupy a configuration in which it is adapted to be fixed on its own to an implant by a screw (40), without a removable impression transfer element (2), the emergent surface of the healing element (4), completed by a head (41) of the screw (40), having a continuous smooth surface in this configuration.

2. Assembly (1) according to the preceding claim, **characterized in that**, in the configuration in which the healing element is fixed on its own to an implant, the head (41) of the screw (40) is recessed in the healing element and does not protrude from the end face (14) of the healing element (10).

3. Assembly (1) according to one of the preceding claims, **characterized in that** first and second parts of the emergent surface, which are intended for a positioning oriented towards the inside and the outside respectively of the mouth, have a different shape.

4. Assembly (1) according to any one of the preceding claims, **characterized in that** a cross section of the lateral surface (13) or a projection on a parallel plane of the emergent surface has:
• a substantially trapezoidal shape or a substantially polygonal shape, or triangular, or square, or rectangular, or ovoid, or a substantially polygonal shape with rounded corners; and/or
• a second part, intended for a positioning oriented towards the outside of the mouth, of greater size than a first part intended for a positioning oriented inwards.

5. Assembly (1) according to either of Claims 1 and 2, **characterized in that** the end surface (14) and/or the emergent surface has:
• a non-flat, curved surface; and/or
• a convex surface; and/or
• a smooth surface, in particular except for the through-opening (11), or **characterized in that** the end surface (14) and/or the emergent surface of the healing element (10), completed by a head (41) of a screw (40) when the healing element (10) is fixed on its own by a screw (40), has a surface without reliefs and/or without a hollow part and/or without a groove and/or without a ridge and/or convex.

6. Assembly (1) according to any one of the preceding claims, **characterized in that** the emergent surface of the healing element has an identifiable three-dimensional shape, automatically permitting its recognition, its positioning and/or its orientation and, indirectly, the positioning and the orientation of the implant, without a marker, by reproduction of all or part of this emergent surface on an impression material.

7. Assembly (1) according to any one of the preceding claims, **characterized in that** the healing element (10) is a cap which comprises an opening in a surface opposite the end surface (14).

8. Assembly (1) according to any one of the preceding claims, **characterized in that** the fixing part (4) comprises a first, substantially cylindrical component (7a) and a second component (7b) comprising at least one anchoring element, in particular two anchoring elements.

9. Assembly (1) according to the preceding claim, **characterized in that**:
- said at least one anchoring element is defined on an outer peripheral wall of the first component (7a), in particular at a free end of the fixing part (4), and/or
- said at least one anchoring element has a cross section having essentially the shape of a quadrilateral, and/or
- a median plane (P1) of said anchoring element is substantially perpendicular to a longitudinal axis (A1) of the transfer element (2).

10. Assembly (1) according to any one of the preceding claims, **characterized in that** the connecting part (5) comprises a first portion (9a) capable of bearing on and/or being in contact with the emergent surface, in particular the end surface (14), and a second portion (9b) comprising a fixing element (8) defined in a free end of this connecting part (5).

11. Assembly (1) according any one of the preceding claims, **characterized in that** the transfer element (2) comprises an anti-rotation element (16) defined on all or part of a region of a peripheral wall of this connecting part (5), extending longitudinally on this region in accordance with a longitudinal axis (A3) of this connecting part (5).

12. Assembly (1) according to any one of the preceding claims, **characterized in that** the healing element (10) comprises a seat (19) for positioning said transfer element (2) in a predefined radial direction with respect to a longitudinal axis (A1) of this transfer element (2).

13. Assembly (1) according to any one of the preceding claims, **characterized in that** the transfer element (2) is a single piece and/or **in that** the healing element (10) is a single piece.

14. Assembly (1) according to any one of claims 1 to 12, **characterized in that** the transfer element (2) comprises a first part and a second part, or top part, which is breakable and provided with an anchoring element, said first and second parts forming a one-piece assembly.

15. Method for taking a dental impression using a dental impression assembly (1) according to any one of the preceding claims, comprising a step of arranging (70) a removable impression transfer element (2) on a healing element (10) situated in an upper or lower jaw of an oral cavity, and a step of placing (71) an impression tray, having an impression material, on said jaw such that a fixing part (4) of said transfer element (2) is included in said impression material, and at least part of the emergent surface of the healing element is included in said impression material.
